# EUROPEAN PATENT APPLICATION

(11) **EP 4 794 048 A1**
(43) Date of publication of application: **19.08.2026**
(21) Application number: 25769112.1
(22) Date of filing: 06.01.2025
(51) Int. Cl.: H01M 10/0587, H01M 10/0525

(54) **SECONDARY BATTERY AND ELECTRIC APPARATUS**

(30) Priority: 11.03.2024 CN 202410274977
(71) Applicant: Ningde Amperex Technology Limited, Ningde, Fujian 352100 (CN)
(72) Inventor: YAO, Meina, Ningde, Fujian 352100 (CN)
(74) Representative: Dehns Germany Partnerschaft mbB
(86) International application number: PCT/CN2025/070704
(87) International publication number: WO 2025/189938

(57) **Abstract**

The present application provides a secondary battery and an electric apparatus, the secondary battery including an electrode assembly, and the electrode assembly being a jelly-roll structure, where the electrode assembly includes a positive electrode plate, a negative electrode plate, a first separator, and a second separator; the first separator includes a first base film and a first ceramic coating, the first ceramic coating being disposed on at least one side of the first base film, the first ceramic coating including first ceramic particles, and the first ceramic particles including at least one of aluminum oxide, zirconium dioxide, titanium dioxide, or silicon dioxide; and the second separator includes a second base film and a second ceramic coating, the second ceramic coating being disposed on at least one side of the second base film, the second ceramic coating including second ceramic particles, and the second ceramic particles including boehmite. Through the above disposition, the secondary battery can balance energy density, cycling performance, and safety performance.

## Description

The present application claims priority to Chinese Patent Application No. 202410274977.6, filed on March 11, 2024 and entitled "SECONDARY BATTERY AND ELECTRIC APPARATUS," the entire content of which is incorporated herein by reference.

### TECHNICAL FIELD

The present application relates to the field of electrochemical technology, and more particularly, to a secondary battery and an electric apparatus.

### BACKGROUND

Secondary batteries (such as lithium-ion batteries) have advantages of high energy density, long cycle life, low self-discharge rate, and environmental friendliness, and have been widely used in fields such as aviation, aerospace, navigation, electric vehicles, and mobile electronic products. A lithium-ion battery is formed by a positive electrode plate, a negative electrode plate, and a separator, where the performance of the separator is crucial for the overall performance of the lithium-ion battery. However, it is difficult for the existing separators used in lithium-ion batteries to balance energy density, cycling performance, and safety performance of the lithium-ion batteries.

### SUMMARY

An objective of the present application is to provide a secondary battery capable of balancing energy density, cycling performance, and safety performance, and to provide an electric apparatus using the secondary battery.

It should be noted that, in the summary of the present application, a lithium-ion battery is used as an example to explain the secondary battery of the present application, but the secondary battery of the present application is not limited to lithium-ion batteries. The specific technical solutions are as follows:

A first aspect of the present application provides a secondary battery, the secondary battery including an electrode assembly. The electrode assembly is a jelly-roll structure, the electrode assembly including a positive electrode plate, a negative electrode plate, a first separator, and a second separator. The first separator includes a first base film and a first ceramic coating, the first ceramic coating being disposed on at least one side of the first base film, the first ceramic coating including first ceramic particles, and the first ceramic particles including at least one of aluminum oxide, zirconium dioxide, titanium dioxide, or silicon dioxide. The second separator includes a second base film and a second ceramic coating, the second ceramic coating being disposed on at least one side of the second base film, the second ceramic coating including second ceramic particles, and the second ceramic particles including boehmite.

In the prior art, ceramic coatings of separators typically include oxides and boehmite, both of which have relatively significant effect on the performance of secondary batteries. Oxides have good wettability and liquid absorption and retention capabilities, which can improve the cycling performance of secondary batteries, but oxides have relatively high hardness, causing relatively significant wear on equipment, and leading to relatively high equipment costs, and oxides have high density and lack flame retardance, which are disadvantageous to the energy density and safety of secondary batteries. Compared to oxides, boehmite has lower hardness, higher heat resistance, lower density, and better adhesion, which can improve the heat resistance and puncture resistance of the separator, thereby improving the safety performance and energy density of the secondary battery, but boehmite has relatively poor electrolyte wettability, which is unfavorable to liquid retention and the cycling performance of secondary batteries. In the present application, the type of the first ceramic particles in the first separator and the type of the second ceramic particles in the second separator are adjusted to be within the scope of the present application, enabling the separators in the secondary battery to have ceramic coatings with different properties, thereby balancing the advantages of oxide ceramic coatings and boehmite ceramic coatings. The first separator has good electrolyte retention capability and wettability for the electrolyte, and the second separator has low cost and low density, which can increase the energy density of the secondary battery. The second separator also exhibits good stability at high temperatures with low thermal shrinkage, reducing the possibility of short circuits caused by contact between the positive electrode plate and the negative electrode plate due to shrinkage of the second separator during charging and discharging of the secondary battery, thereby providing the secondary battery with good safety performance. The use of the first separator and the second separator with different ceramic coatings enables the secondary battery to balance safety performance, cycling performance, cost-effectiveness, and energy density.

In some embodiments of the present application, the negative electrode plate is located between the first separator and the second separator, the negative electrode plate includes a negative electrode current collector and a first negative electrode material layer and a second negative electrode material layer disposed on two sides of the negative electrode current collector, where along a winding direction of the electrode assembly, a length of the first negative electrode material layer is greater than a length of the second negative electrode material layer, the first separator is disposed on a side of the first negative electrode material layer of the negative electrode plate, and the second separator is disposed on a side of the second negative electrode material layer of the negative electrode plate. Since boehmite can provide the second separator with higher heat resistance and puncture resistance, disposing the second separator on the side of the second negative electrode material layer of the negative electrode plate can better reduce the risk of the secondary battery being prone to short circuits between the positive and negative electrodes under high-temperature or puncture conditions. The oxide ceramic provides the first separator with better wettability and liquid absorption and retention capabilities, which can improve the cycling performance of the secondary battery. Disposing the first separator on the side of the first negative electrode material layer with a relatively large length in the negative electrode plate allows more of the negative electrode active material to contact a larger amount of electrolyte, further improving the cycling performance of the secondary battery and alleviating lithium precipitation. Through the above disposition, the secondary battery can further improve its cycling performance and safety performance while balancing energy density and cost-effectiveness.

In some embodiments of the present application, the first ceramic coating is disposed on both sides of the first base film. By disposing the first ceramic coating on both sides of the first base film, the first separator can retain more electrolyte, further improving the cycling performance of the secondary battery while balancing energy density and safety performance.

In some embodiments of the present application, the second separator is located between the positive electrode plate and the negative electrode plate, and the second ceramic coating is disposed only on the side of the second base film facing away from the negative electrode plate. The second separator is located between the positive electrode plate and the negative electrode plate, and by disposing the second ceramic coating on the side of the second base film facing away from the negative electrode plate, since the positive electrode active material particles on the positive electrode plate are relatively hard and some relatively large, or relatively sharp positive electrode active material particles may occasionally protrude from the positive electrode plate, during the production or use of the secondary battery, such positive electrode active material particles may puncture the separator between the positive electrode plate and the negative electrode plate, causing a short circuit between the positive and negative electrode plates. The second ceramic coating on the second separator is disposed only on the side of the second base film facing away from the negative electrode plate, meaning that the second ceramic coating faces the positive electrode plate. Since boehmite can enhance the puncture resistance of the separator, it can reduce the possibility of the positive electrode active material puncturing the separator, better protecting the second base film. Additionally, disposing the second ceramic coating on only one single side can reduce costs and increase the energy density of the secondary battery while further improving safety performance.

In some embodiments of the present application, the average particle size of the first ceramic particles is from 0.2 µm to 1.2 µm, and the average particle size of the second ceramic particles is from 0.1 µm to 1.0 µm. Adjusting the average particle sizes of the first ceramic particles and the second ceramic particles to be within the above ranges helps to further improve the cycling performance of the secondary battery while balancing energy density and safety performance.

In some embodiments of the present application, the first separator includes a first adhesive layer, the first adhesive layer being disposed on both sides of the first base film, and the first ceramic coating being disposed between the first base film and the first adhesive layer; and the second separator includes a second adhesive layer, the second adhesive layer being disposed on both sides of the second base film, and the second ceramic coating being disposed between the second base film and the second adhesive layer. The above disposition enables the first separator and the second separator to have good adhesion force, allowing better fixation with the electrode plates, and reducing the possibility of gaps forming between the positive electrode plate, the negative electrode plate, and the separators during use of the secondary battery, which could cause electrolyte bridging, thereby increasing the probability of lithium precipitation, black spots, reduced cycling performance, reduced capacity, or the like. When the second separator has the second ceramic coating disposed on only one side, one side surface of the second base film is provided with the second adhesive layer, and the other side surface of the second base film is sequentially provided with the second ceramic coating and the second adhesive layer. The same applies if the first separator has the first ceramic coating disposed on only one side.

In some embodiments of the present application, based on a mass of the first ceramic coating, a mass percentage of the first ceramic particles is from 10% to 50%; and based on a mass of the second ceramic coating, a mass percentage of the second ceramic particles is from 10% to 50%. Adjusting the mass percentage of the first ceramic particles in the first ceramic coating and the mass percentage of the second ceramic particles in the second ceramic coating to be within the above ranges ensures the percentage of ceramic particles in the ceramic coatings, allowing the ceramic particles to fully perform their respective functions while balancing the energy density and manufacturing cost of the secondary battery.

In some embodiments of the present application, the thickness of the first separator is from 5.4 µm to 7.4 µm, and the thickness of the second separator is from 5.1 µm to 6.3 µm. Adjusting the thicknesses of the first separator and the second separator to be within the above ranges helps to further increase the energy density of the secondary battery while maintaining good cycling performance and safety performance.

In some embodiments of the present application, the thickness of the first ceramic coating is from 0.5 µm to 1.5 µm, and the thickness of the second ceramic coating is from 0.3 µm to 1.5 µm. Adjusting the thicknesses of the first ceramic coating and the second ceramic coating to be within the above ranges helps to further increase the energy density of the secondary battery while maintaining good cycling performance and safety performance.

In some embodiments of the present application, the materials of the first adhesive layer and the second adhesive layer each independently include at least one of polyvinylidene fluoride, polyvinylidene fluoride-hexafluoropropylene copolymer, polyimide, polyvinyl alcohol, or sodium carboxymethyl cellulose. The above types of the first binder and second binder materials exhibit good adhesion in an electrolyte environment, enabling effective bonding between the separator and the electrode plates.

A second aspect of the present application provides an electric apparatus, the electric apparatus including the secondary battery described in any of the foregoing embodiments. Thus, the electric apparatus has good operational performance.

Beneficial effects of the present application:

The present application provides a secondary battery and an electric apparatus, where by using a first separator provided with an oxide ceramic coating and a second separator provided with a boehmite ceramic coating, the advantages of both types of separator ceramic coatings can be balanced, enabling the secondary battery to simultaneously achieve high cycling performance, high safety performance, and high energy density. Furthermore, by combining the performance characteristics of the oxide ceramic coating and the boehmite ceramic coating with the structure of the secondary battery, the cycling performance and safety performance of the secondary battery can be further improved.

It should be noted that implementing any product or method of the present application does not necessarily require achieving all the advantages described above simultaneously.

### BRIEF DESCRIPTION OF DRAWINGS

The drawings described herein are provided to further understand the present application and form a part of the present application. The schematic embodiments and their descriptions are used to explain the present application and do not constitute an improper limitation of the present application.
FIG. 1 is a schematic diagram of a partial structure of an electrode assembly unfolded along a winding direction according to some embodiments of the present application;
FIG. 2 is a schematic diagram of a partial structure of an electrode assembly unfolded along a winding direction according to some other embodiments of the present application;
FIG. 3 is a schematic structural diagram of a first separator in an unfolded state according to some embodiments of the present application;
FIG. 4 is a schematic structural diagram of a second separator in an unfolded state according to some embodiments of the present application; and
FIG. 5 is a schematic diagram of a partial structure of an electrode assembly unfolded along a winding direction according to some embodiments of the present application.

Description of reference signs in the drawings:
electrode assembly 100; first separator 10; first base film 11; first adhesive layer 12; first ceramic coating 13; second separator 20; second base film 21; second adhesive layer 22; second ceramic coating 23; negative electrode plate 30; negative electrode current collector 31; first negative electrode material layer 33; second negative electrode material layer 34; positive electrode plate 40; positive electrode current collector 41; and positive electrode material layer 42.

### DETAILED DESCRIPTION

To make the objectives, technical solutions, and advantages of the present application clearer, the present application is further described in detail below with reference to the drawings and embodiments. It is apparent that the described embodiments are only some embodiments of the present application, not all embodiments. All other embodiments obtained by those skilled in the art based on the present application fall within the scope of protection of the present application.

It should be noted that, in specific embodiments of the present application, the present application is described using an example of a lithium-ion battery being a secondary battery, but the secondary battery of the present application is not limited to lithium-ion batteries.

A first aspect of the present application provides a secondary battery, the secondary battery including an electrode assembly, the electrode assembly being a jelly-roll structure, and the electrode assembly including a positive electrode plate, a negative electrode plate, a first separator, and a second separator. The first separator includes a first base film and a first ceramic coating, the first ceramic coating being disposed on at least one side of the first base film. The phrase "the first ceramic coating being disposed on at least one side of the first base film" means that the first ceramic coating may be disposed on one side of the first base film or on both sides of the first base film. The first ceramic coating includes first ceramic particles, the first ceramic particles including at least one of aluminum oxide (Al₂O₃), zirconium dioxide (ZrO₂), titanium dioxide (TiO₂), or silicon dioxide (SiO₂). The second separator includes a second base film and a second ceramic coating, the second ceramic coating being disposed on at least one side of the second base film. The phrase "the second ceramic coating being disposed on at least one side of the second base film" means that the second ceramic coating may be disposed on one side of the second base film or on both sides of the second base film. The second ceramic coating includes second ceramic particles, the second ceramic particles including boehmite (γ-AlOOH).

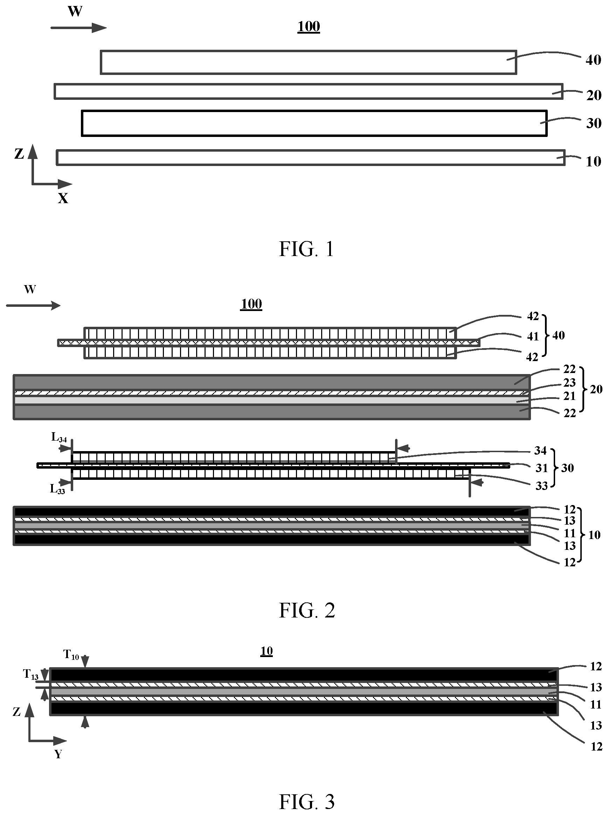

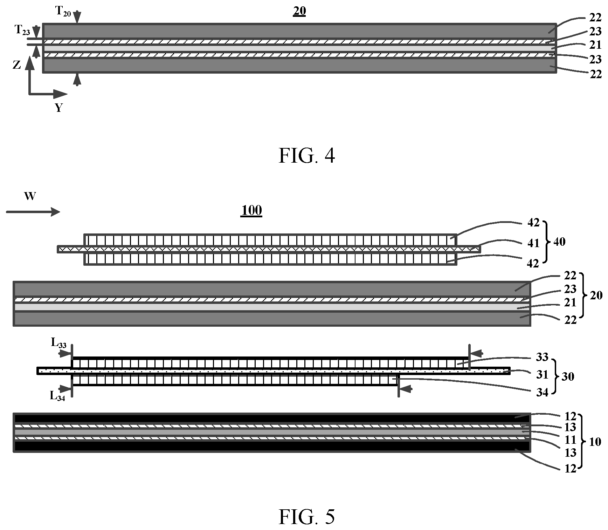

In the present application, the electrode assembly is of a jelly-roll structure, and the winding direction of the electrode assembly is defined as W. Those skilled in the art should understand that the winding directions of the positive electrode plate, negative electrode plate, first separator, and second separator are the same as the winding direction of the electrode assembly. To facilitate understanding of the positional relationship among the positive electrode plate, negative electrode plate, first separator, and second separator in the electrode assembly, FIG. 1 is a schematic diagram of a partial structure of the electrode assembly unfolded along a winding direction W. In the present application, when the positive electrode plate, negative electrode plate, first separator, and second separator are in an unfolded state, their length direction is defined as X, their width direction as Y, and their thickness direction as Z. It can be understood that, in the schematic structural diagram of the electrode assembly unfolded along the winding direction W, the winding direction W is parallel to the length direction X. As shown in FIG. 1, the electrode assembly 100 includes a first separator 10, a second separator 20, a negative electrode plate 30, and a positive electrode plate 40, with the negative electrode plate 30 located between the first separator 10 and the second separator 20. As shown in FIG. 2, the first separator 10 includes a first base film 11 and a first ceramic coating 13, the first ceramic coating 13 being disposed on both sides of the first base film 11. It should be understood that, in some embodiments, the first ceramic coating 13 may alternatively be disposed on only one side of the first base film 11. As shown in FIG. 4, the second separator 20 includes a second base film 21 and a second ceramic coating 23, the second ceramic coating 23 being disposed on both sides of the second base film 21. It should be understood that, in some embodiments, the second ceramic coating 23 may alternatively be disposed on only one side of the second base film 21.

The first ceramic particles have good wettability and liquid absorption and retention capabilities. Selecting the above types of first ceramic particles for the first ceramic coating can improve the electrolyte retention capability and wettability of the first separator, thereby improving the cycling performance of the secondary battery. The second ceramic particles have high heat resistance, high puncture resistance, and low density. Selecting the above types of second ceramic particles for the second ceramic coating can retard the shrinkage of the second separator at high temperatures, lowering the possibility of short circuits of the secondary battery caused by contact between the positive electrode plate and the negative electrode plate due to shrinkage of the second separator during charging and discharging of the secondary battery, and improving the binding capability of the second separator, thereby improving the safety performance and energy density of the secondary battery.

In the present application, the type of first ceramic particles in the first separator and the type of second ceramic particles in the second separator are adjusted to be within the scope of the present application, enabling the separators in the secondary battery to have ceramic coatings with different properties, thereby balancing the advantages of oxide ceramic coatings and boehmite ceramic coatings. The first separator has good electrolyte retention capability and wettability for the electrolyte, and the second separator has low cost and low density, which can increase the energy density of the secondary battery. The second separator also exhibits good stability at high temperatures with low thermal shrinkage, reducing the possibility of short circuits caused by contact between the positive electrode plate and the negative electrode plate due to shrinkage of the second separator during charging and discharging of the secondary battery, thereby providing the secondary battery with good safety performance. The use of the first separator and the second separator with different ceramic coatings enables the secondary battery to balance safety performance, cycling performance, cost-effectiveness, and energy density.

In some embodiments of the present application, the negative electrode plate is located between the first separator and the second separator, the negative electrode plate includes a negative electrode current collector and a first negative electrode material layer and a second negative electrode material layer disposed on two sides of the negative electrode current collector, where along a winding direction of the electrode assembly, a length of the first negative electrode material layer is greater than a length of the second negative electrode material layer, the first separator is disposed on a side of the first negative electrode material layer of the negative electrode plate, and the second separator is disposed on a side of the second negative electrode material layer of the negative electrode plate. As shown in FIG. 2, the electrode assembly 100 includes a first separator 10, a second separator 20, a negative electrode plate 30, and a positive electrode plate 40, with the negative electrode plate 30 located between the first separator 10 and the second separator 20, and the second separator 20 located between the positive electrode plate 40 and the negative electrode plate 30. The positive electrode plate 40 includes a positive electrode current collector 41 and a positive electrode material layer 42 disposed on both sides of the positive electrode current collector 41. The negative electrode plate 30 includes a negative electrode current collector 31 and a first negative electrode material layer 33 and a second negative electrode material layer 34 disposed on two sides of the negative electrode current collector 31. Along the winding direction W of the electrode assembly 100, the length L₃₃ of the first negative electrode material layer 33 is greater than the length L₃₄ of the second negative electrode material layer 34. The first separator 10 is disposed on the side of the first negative electrode material layer 33 of the negative electrode plate 30, or it can be understood that the first separator 10 is adjacent to the first negative electrode material layer 33. The second separator 20 is disposed on the side of the second negative electrode material layer 34 of the negative electrode plate 30, or it can be understood that the second separator 20 is adjacent to the second negative electrode material layer 34. Since boehmite can provide the second separator with higher heat resistance and puncture resistance, disposing the second separator on the side of the second negative electrode material layer of the negative electrode plate can better reduce the risk of secondary battery short circuits between the positive and negative electrodes under high-temperature or puncture conditions. The oxide ceramic provides the first separator with better wettability and liquid absorption and retention capabilities, which can improve the cycling performance of the secondary battery. Disposing the first separator on the side of the first negative electrode material layer with a relatively large length in the negative electrode plate allows more of the negative electrode active material to contact a larger amount of electrolyte, further improving the cycling performance of the secondary battery and alleviating lithium precipitation. Through the above disposition, the secondary battery can further improve its cycling performance and safety performance while balancing energy density and cost-effectiveness.

In some embodiments of the present application, the first ceramic coating is disposed on both sides of the first base film. As shown in FIG. 3, the first separator 10 includes a first base film 11 and a first ceramic coating 13, the first ceramic coating 13 being disposed on both sides of the first base film 11. Disposing the first ceramic coating on both sides of the first base film is more conducive to improving the electrolyte retention capability and wettability of the first separator, enabling the first separator to retain more electrolyte, thereby further improving the electrolyte retention capability and wettability of the secondary battery. This allows the secondary battery to further improve its cycling performance while balancing energy density and safety performance.

In some embodiments of the present application, the second separator is located between the positive electrode plate and the negative electrode plate, and the second ceramic coating is disposed only on the side of the second base film facing away from the negative electrode plate. As shown in FIG. 2, the second separator 20 includes a second base film 21 and a second ceramic coating 23, the second ceramic coating 23 being disposed on the side of the second base film 21 facing away from the negative electrode plate 30, that is, the second ceramic coating 23 is disposed on the side of the second base film 21 close to and facing the positive electrode plate 40, while the side of the second base film 21 close to the negative electrode plate 30 is not provided with the second ceramic coating 23. When positive electrode active material particles in the positive electrode plate have a relatively large particle size or are relatively sharp, during the production or use of the secondary battery, these positive electrode active material particles may press or even puncture the separator located between the positive electrode plate and the negative electrode plate, causing a short circuit between the positive and negative electrode plates. In the above disposition, by disposing the second ceramic coating on the side of the second base film facing away from the negative electrode plate, that is, with the second ceramic coating facing the positive electrode plate, since boehmite can improve the puncture resistance of the separator, it can reduce the possibility of the above large or relatively sharp positive electrode active material particles puncturing the second separator, thereby better protecting the second base film. Additionally, disposing the second ceramic coating on only one single side can reduce costs and increase the energy density of the secondary battery while further enhancing safety performance.

In some embodiments of the present application, the average particle size of the first ceramic particles is from 0.2 µm to 1.2 µm, and the average particle size of the second ceramic particles is from 0.1 µm to 1.0 µm. For example, the average particle size of the first ceramic particles may be 0.2 µm, 0.4 µm, 0.6 µm, 0.8 µm, 1.0 µm, 1.2 µm, or any value within the range of any two of these values. For example, the average particle size of the second ceramic particles may be 0.1 µm, 0.2 µm, 0.3 µm, 0.4 µm, 0.5 µm, 0.6 µm, 0.7 µm, 0.8 µm, 0.9 µm, 1.0 µm, or any value within the range of any two of these values. Adjusting the average particle sizes of the first ceramic particles and the second ceramic particles to be within the above ranges ensures that the first ceramic particles and the second ceramic particles have a high specific surface area, which can improve the electrolyte retention capability and wettability of the first separator and the second separator, thereby facilitating further improvement in the cycling performance of the secondary battery while balancing energy density and safety performance.

In the present application, there is no particular limitation on the method of adjusting the average particle sizes of the first ceramic particles and the second ceramic particles, as long as it achieves the objective of the present application. For example, this can be achieved through methods such as crushing or sieving.

In some embodiments of the present application, the first separator includes a first base film, a first ceramic coating, and a first adhesive layer, the first adhesive layer being disposed on both sides of the first base film, and the first ceramic coating being disposed between the first base film and the first adhesive layer. In some embodiments, the first ceramic coating is disposed on both surfaces of the first base film, and the first adhesive layers on two sides of the first base film are each disposed on the surface of the first ceramic coating. For example, as shown in FIG. 3, the first separator 10 includes a first base film 11, a first ceramic coating 13, and a first adhesive layer 12, the first ceramic coating 13 being disposed on both surfaces of the first base film 11 along the thickness direction Z, and the first adhesive layers 12 disposed on two sides of the first base film 11 being respectively disposed on the surface of the first ceramic coating 13, with the first ceramic coating 13 located between the first base film 11 and the first adhesive layer 12. In some other embodiments, the first ceramic coating is disposed on only one side of the first base film, the first adhesive layer is disposed on both sides of the first base film, the first adhesive layer on the same side as the first ceramic coating is disposed on the surface of the first ceramic coating, such that the first ceramic coating is located between the first base film and the first adhesive layer, and the first adhesive layer on the other side of the first base film is directly disposed on the surface of the first base film. The disposition of the first adhesive layer in the first separator enables the first separator to have good adhesion force, allowing better fixation with the electrode plates, and reducing the possibility of gaps forming between the positive electrode plate, the negative electrode plate, and the separator during use of the secondary battery, which could cause electrolyte bridging, thereby increasing the probability of lithium precipitation, black spots, reduced cycling performance, reduced capacity, and the like.

In some embodiments of the present application, the second separator includes a second adhesive layer, the second adhesive layer being disposed on both sides of the second base film, and the second ceramic coating being disposed between the second base film and the second adhesive layer. In some embodiments, the second ceramic coating is disposed on both surfaces of the second base film, and the second adhesive layers on two sides of the second base film are each disposed on the surface of the second ceramic coating. For example, as shown in FIG. 4, the second separator 20 includes a second base film 21, a second ceramic coating 23, and a second adhesive layer 22, the second ceramic coating 23 being disposed on both surfaces of the second base film 21 along the thickness direction Z, and the second adhesive layers 22 disposed on two sides of the second base film 21 being respectively disposed on the surfaces of the second ceramic coatings 23, with the second ceramic coating 23 located between the second base film 21 and the second adhesive layer 22. In some other embodiments, the second ceramic coating is disposed on only one side of the second base film, the second adhesive layer is disposed on both sides of the second base film, the second adhesive layer on the same side as the second ceramic coating is disposed on the surface of the second ceramic coating, such that the second ceramic coating is located between the second base film and the second adhesive layer, and the second adhesive layer on the other side of the second base film is directly disposed on the surface of the second base film. The disposition of the second adhesive layer in the second separator enables the second separator to have good adhesion force, allowing better fixation with the electrode plates, and reducing the possibility of gaps forming between the positive electrode plate, the negative electrode plate, and the separator during use of the secondary battery, which could cause electrolyte bridging, thereby increasing the probability of lithium precipitation, black spots, reduced cycling performance, reduced capacity, and the like.

In some embodiments of the present application, based on a mass of the first ceramic coating, a mass percentage of the first ceramic particles is from 10% to 50%. For example, the mass percentage of the first ceramic particles may be 10%, 20%, 25%, 30%, 36%, 42%, 50%, or any value within the range of any two of these values. Adjusting the mass percentage of the first ceramic particles in the first ceramic coating to be within the above range ensures the percentage of the first ceramic particles in the first ceramic coating, allowing the first ceramic particles to fully perform their respective functions, thus resulting in a first separator with good electrolyte retention capability and wettability. Applying the first separator to the secondary battery helps the secondary battery to have good cycling performance while balancing the energy density and manufacturing cost of the secondary battery.

In some embodiments of the present application, based on a mass of the second ceramic coating, a mass percentage of the second ceramic particles is from 10% to 50%. For example, the mass percentage of the second ceramic particles may be 10%, 20%, 25%, 30%, 36%, 42%, 50%, or any value within the range of any two of these values. Adjusting the mass percentage of the second ceramic particles in the second ceramic coating to be within the above range ensures the percentage of the second ceramic particles in the second ceramic coating, allowing the second ceramic particles to fully perform their respective functions, and resulting in a second separator with good thermal stability and puncture resistance. Applying the second separator to the secondary battery helps the secondary battery to achieve good safety performance while balancing the energy density and manufacturing cost of the secondary battery.

In some embodiments of the present application, the first ceramic coating further includes a first ceramic coating binder, and the second ceramic coating further includes a second ceramic coating binder. There is no particular limitation on the types of the first ceramic coating binder and the second ceramic coating binder in the present application, as long as they achieve the objective of the present application. For example, the first ceramic coating binder and the second ceramic coating binder each independently include at least one of styrene-butadiene rubber, polyvinyl alcohol, polyvinylidene fluoride, polyacrylic acid, polymethyl methacrylate, polybutyl acrylate, or polyacrylonitrile. There is no particular limitation on the percentage of the first ceramic coating binder in the first ceramic coating or the percentage of the second ceramic coating binder in the second ceramic coating in the present application, and those skilled in the art can select as needed, as long as it achieves the objective of the present application. For example, based on the mass of the first ceramic coating, the mass percentage of the first ceramic coating binder is from 50% to 90%; and based on the mass of the second ceramic coating, the mass percentage of the second ceramic coating binder is from 50% to 90%.

In some embodiments of the present application, as shown in FIG. 3, the thickness T₁₀ of the first separator 10 is from 5.4 µm to 7.4 µm, and as shown in FIG. 4, the thickness T₂₀ of the second separator 20 is from 5.1 µm to 6.3 µm. For example, the thickness of the first separator may be 5.4 µm, 5.6 µm, 5.8 µm, 6.0 µm, 6.3 µm, 6.8 µm, 7.0 µm, 7.2 µm, 7.4 µm, or any value within the range of any two of these values. For example, the thickness of the second separator may be 5.1 µm, 5.2 µm, 5.8 µm, 6.0 µm, 6.3 µm, or any value within the range of any two of these values. Adjusting the thicknesses of the first separator and the second separator to be within the above ranges helps the secondary battery to have a relatively small volume, thereby reducing the risk of energy density loss due to excessive volume, thus helping to further increase the energy density of the secondary battery while maintaining good cycling performance and safety performance.

In some embodiments of the present application, as shown in FIG. 3, the thickness T₁₃ of the first ceramic coating 13 is from 0.5 µm to 1.5 µm, and as shown in FIG. 4, the thickness T₂₃ of the second ceramic coating 23 is from 0.3 µm to 1.5 µm. For example, the thickness of the first ceramic coating may be 0.5 µm, 1.0 µm, 1.5 µm, or any value within the range of any two of these values. For example, the thickness of the second ceramic coating may be 0.3 µm, 1.2 µm, 1.5 µm, or any value within the range of any two of these values. Adjusting the thicknesses of the first ceramic coating and the second ceramic coating to be within the above ranges helps the first separator and the second separator to have a relatively small thickness and the secondary battery to have a relatively small volume, thus helping to further increase the energy density of the secondary battery while maintaining good cycling performance and safety performance.

In some embodiments of the present application, the materials of the first adhesive layer and the second adhesive layer each independently include at least one of polyvinylidene fluoride, polyvinylidene fluoride-hexafluoropropylene copolymer, polyimide, polyvinyl alcohol, or sodium carboxymethyl cellulose. When the above types of first binder and the second binder materials are used in the first separator and the second separator, they exhibit good compatibility with the electrolyte and good adhesion to the positive electrode plate and the negative electrode plate, helping the first separator and the second separator to have good adhesion force. Thus, applying the first separator and the second separator to the secondary battery helps the first separator and the second separator to have good electrolyte retention capability and wettability, and also facilitates adhesion force between the first separator and the second separator and the positive electrode plate and/or the negative electrode plate. As a result, the secondary battery can balance energy density, cycling performance, and safety performance.

There is no particular limitation on the materials of the first base film and the second base film in the present application, as long as they achieve the objective of the present application. For example, the materials of the first base film and the second base film each independently include at least one of polyimide, polyamide, polysulfone, polyacrylonitrile, cellulose, polyetheretherketone, polyphenylene sulfide, polyacrylate, polyethylene terephthalate, polyparaphenylene terephthalamide, polyarylethersulfoneketone, aramid, aromatic polysulfonamide, or polyolefin, where the polymeric monomer of the polyolefin includes at least one of ethylene, propylene, 1-butene, 1-pentene, 1-hexene, 1-octene, 4-methyl-1-pentene, cyclobutene, cyclopentene, or cyclohexene. There is no particular limitation on the weight-average molecular weight of the material of the first base film in the present application, as long as it achieves the objective of the present application. For example, the weight-average molecular weight of the material of the first base film may be from 2×105 to 1.5×10⁶. There is no particular limitation on the weight-average molecular weight of the material of the second base film in the present application, as long as it achieves the objective of the present application. For example, the weight-average molecular weight of the material of the second base film may be from 2×105 to 1.5×10⁶. There is no particular limitation on the thicknesses of the first base film and the second base film in the present application, as long as they achieve the objective of the present application.

There is no particular limitation on the negative electrode current collector in the present application, as long as it achieves the objective of the present application. For example, the negative electrode current collector may include copper foil, copper alloy foil, nickel foil, stainless steel foil, titanium foil, nickel foam, copper foam, or a composite current collector (for example, copper composite current collector, carbon-copper composite current collector, nickel-copper composite current collector, or titanium-copper composite current collector). The first negative electrode material layer and the second negative electrode material layer of the present application each independently include a negative electrode active material. There is no particular limitation on the type of negative electrode active material in the present application, as long as it achieves the objective of the present application. For example, the negative electrode active material may include at least one of natural graphite, artificial graphite, mesocarbon microbeads (MCMB), hard carbon, soft carbon, silicon, silicon-carbon composite, SiOₓ (0<x<2), Li-Sn alloy, Li-Sn-O alloy, Sn, SnO, SnO₂, lithium titanate Li₄Ti₅O₁₂ with a spinel structure, Li-Al alloy, or metallic lithium. In the present application, there is no particular limitation on the thicknesses of the negative electrode current collector, the first negative electrode material layer, and the second negative electrode material layer, as long as they achieve the objective of the present application. For example, the thickness of the negative electrode current collector may be from 4 µm to 15 µm, the thickness of the first negative electrode material layer may be from 30 µm to 130 µm, and the thickness of the second negative electrode material layer may be from 30 µm to 130 µm. Optionally, the first negative electrode material layer and the second negative electrode material layer may further include a conductive agent and a binder. There is no particular limitation on the mass ratio of the negative electrode active material, conductive agent, and binder in the first negative electrode material layer and the second negative electrode material layer in the present application, as long as it achieves the objective of the present application.

In some embodiments of the present application, the positive electrode plate includes a positive electrode current collector and a positive electrode material layer disposed on one or both sides of the positive electrode current collector. There is no particular limitation on the positive electrode current collector in the present application, as long as it achieves the objective of the present application. For example, the positive electrode current collector may include aluminum foil, aluminum alloy foil, or a composite current collector (for example, aluminum-carbon composite current collector). The positive electrode material layer of the present application includes a positive electrode active material, and there is no particular limitation on the type of positive electrode active material in the present application, as long as it achieves the objective of the present application. For example, the positive electrode active material may include at least one of lithium nickel cobalt manganese oxide (NCM811, NCM622, NCM523, NCM111), lithium nickel cobalt aluminum oxide, lithium iron phosphate, lithium-rich manganese-based material, lithium cobalt oxide (LiCoO₂), lithium manganese oxide, lithium manganese iron phosphate, or lithium titanate. In the present application, the positive electrode active material may further include non-metal elements, such as, but not limited to, at least one of fluorine, phosphorus, boron, chlorine, silicon, or sulfur. In the present application, there is no particular limitation on the thicknesses of the positive electrode current collector and the positive electrode material layer, as long as they achieve the objective of the present application. For example, the thickness of the positive electrode current collector may be from 9 µm to 15 µm, and the thickness of the positive electrode material layer on one side may be from 30 µm to 120 µm. In the present application, the positive electrode material layer may further include a conductive agent and a binder. There is no particular limitation on the types of the conductive agent and the binder in the positive electrode material layer in the present application, as long as they achieve the objective of the present application. There is no particular limitation on the mass ratio of the positive electrode active material, conductive agent, and binder in the positive electrode material layer in the present application, and those skilled in the art can select as needed, as long as it achieves the objective of the present application.

There is no particular limitation on the types of conductive agents in the positive electrode material layer, the first negative electrode material layer, and the second negative electrode material layer in the present application, as long as they achieve the objective of the present application. For example, the conductive agent may include, but is not limited to, at least one of conductive carbon black (Super P), carbon nanotubes (CNTs), carbon fibers, flake graphite, Ketjen black, graphene, metal materials, or conductive polymers. The carbon nanotubes may include, but are not limited to, single-walled carbon nanotubes and/or multi-walled carbon nanotubes. The carbon fibers may include, but are not limited to, vapor-grown carbon fibers (VGCF) and/or nano carbon fibers. The metal materials may include, but are not limited to, metal powder and/or metal fibers, specifically, the metal may include, but is not limited to, at least one of copper, nickel, aluminum, or silver. The conductive polymers may include, but are not limited to, at least one of polyphenylene derivatives, polyaniline, polythiophene, polyacetylene, or polypyrrole. There is no particular limitation on the types of binders in the positive electrode material layer, the first negative electrode material layer, and the second negative electrode material layer in the present application, as long as they achieve the objective of the present application. For example, the binder may include, but is not limited to, at least one of polyvinylidene fluoride, vinylidene fluoride-hexafluoropropylene copolymer, polyamide, polyacrylonitrile, polyacrylate, polyacrylic acid, polyacrylate salt, polyvinylpyrrolidone, polyvinyl ether, polymethyl methacrylate, polytetrafluoroethylene, or polyhexafluoropropylene. The types of conductive agents and binders in the positive electrode material layer, the first negative electrode material layer, and the second negative electrode material layer may be the same or different.

In some embodiments of the present application, the secondary battery of the present application further includes an electrolyte and a packaging bag, with the electrode assembly and the electrolyte accommodated in the packaging bag. There is no particular limitation on the electrolyte and the packaging bag in the present application, and those skilled in the art can select known electrolytes and packaging bags in the art as needed, as long as they achieve the objective of the present application.

There is no particular limitation on the preparation method of the first separator in the present application, as long as it achieves the objective of the present application. For example, the preparation method of the first separator includes, but is not limited to, the following steps: (1) Mix the material of the first adhesive layer and a first thickener well to obtain a first adhesive layer slurry; (2) mix the first ceramic particles and a first ceramic coating binder well to obtain a first ceramic coating slurry; (3) apply the first ceramic coating slurry on one surface of the first base film, dry it to form a first ceramic coating on one surface of the first base film, apply the first adhesive layer slurry on the surface of the first ceramic coating away from the first base film, and dry it to obtain a first separator coated with the first ceramic coating and the first adhesive layer on a single side; and (4) repeat the above steps on the other surface of the first base film to obtain a first separator. In one embodiment of the present application, after step (3), only the first adhesive layer slurry may be applied on the other surface of the first base film, and dried to obtain the first separator.

There is no particular limitation on the preparation method of the second separator in the present application, as long as it achieves the objective of the present application. For example, the preparation method of the second separator includes, but is not limited to, the following steps: (1) Mix a second binder and a second thickener well to obtain a second adhesive layer slurry; (2) mix the second ceramic particles and a second ceramic coating binder well to obtain a second ceramic coating slurry; (3) apply the second ceramic coating slurry on one surface of the second base film, dry it to form a second ceramic coating on one surface of the second base film, apply the second adhesive layer slurry on the surface of the second ceramic coating away from the second base film, and dry it to obtain a second separator coated with the second ceramic coating and the second adhesive layer on a single side; and (4) repeat the above steps on the other surface of the second base film to obtain a second separator. In one embodiment of the present application, after step (3), only the second adhesive layer slurry may be applied on the other surface of the second base film, and dried to obtain the second separator.

There is no particular limitation on the types of the first thickener and the second thickener in the present application, as long as they achieve the objective of the present application. For example, the first thickener and the second thickener each independently include at least one of hydroxyethyl cellulose, methyl hydroxyethyl cellulose, sodium carboxymethyl cellulose, polyacrylamide, or sodium alginate. There is no particular limitation on the percentage of the first thickener in the first adhesive layer or the percentage of the second thickener in the second adhesive layer in the present application, and those skilled in the art can select as needed, as long as it achieves the objective of the present application.

There is no particular limitation on the secondary battery of the present application, and it may include any apparatus that undergoes an electrochemical reaction. In one embodiment of the present application, the secondary battery may include, but is not limited to, a lithium-ion secondary battery (lithium-ion battery), a sodium-ion secondary battery (sodium-ion battery), a lithium polymer secondary battery, or a lithium-ion polymer secondary battery.

There is no particular limitation on the preparation method of the secondary battery in the present application, and known preparation methods in the art can be selected, as long as they achieve the objective of the present application. For example, the preparation method of the secondary battery includes, but is not limited to, the following steps: Stack the positive electrode plate, the first separator, the negative electrode plate, and the second separator in sequence, and perform operations such as winding or folding as needed to obtain an electrode assembly with a jelly-roll structure, place the electrode assembly in a packaging bag, inject the electrolyte into the packaging bag, and seal it to obtain the secondary battery.

A second aspect of the present application provides an electric apparatus, the electric apparatus including the secondary battery described in any of the foregoing embodiments. Thus, the electric apparatus has good operational performance.

There is no particular limitation on the electric apparatus of the present application, and it may be any electric apparatus known in the art. For example, the electric apparatus may include, but is not limited to, a notebook computer, a pen-input computer, a mobile computer, an e-book reader, a portable phone, a portable fax machine, a portable copier, a portable printer, a headset stereo, a video recorder, an LCD television, a portable cleaner, a portable CD player, a mini disc player, a transceiver, an electronic notebook, a calculator, a memory card, a portable recorder, a radio, a backup power supply, a motor, an automobile, a motorcycle, a power-assisted bicycle, a bicycle, a lighting appliance, a toy, a gaming console, a clock, a power tool, a flashlight, a camera, a large household battery, or a lithium-ion capacitor.

### Examples

The following examples and comparative examples are provided to further describe some embodiments of the present application in detail. Various tests and evaluations are conducted according to the methods described below.

### Test methods and equipment:

### Sampling method for first separator and second Separator:

Lithium-ion batteries from the test examples and comparative examples were disassembled, and a first separator and a second separator were removed and soaked in dimethyl carbonate (DMC) for 20 min to remove residual electrolyte. Then, the first separator and the second separator were placed in an oven and dried at 60°C for 12 h to obtain a first separator sample and a second separator sample. The following is the test for average particle sizes of first ceramic particles and second ceramic particles; and the first separator and the second separator in a thickness test for the first ceramic coating, the second ceramic coating, the first separator, and the second separator were sampled using the above method.

### Test for average particle sizes of first ceramic particles and second ceramic particles:

A cross section of the first separator or the second separator was prepared along the thickness direction by argon ion polishing, the cross section of the first separator or the second separator was observed using a scanning electron microscope (SEM), equivalent diameters (that is, a diameter of a circle, a particle with an irregular cross section was converted into such circle of equal area) of 10 first ceramic particles or 10 second ceramic particles were measured, and the average value was calculated to obtain the average particle size of the first ceramic particles or the average particle size of the second ceramic particles.

### Thickness test for first ceramic coating, second ceramic coating, first separator, and second separator:

Argon ion polishing was performed on the first separator to obtain a cross section of the first separator, the morphology of the cross section of the first separator was observed along the thickness direction using a field emission scanning electron microscope (Philips, model XL-30), SEM images were taken, and a thickness T₁₃ of the first ceramic coating and a thickness T₁₀ of the first separator were measured through the SEM.

Argon ion polishing was performed on the second separator to obtain a cross section of the second separator, the morphology of the cross section of the second separator was observed along the thickness direction using a field emission scanning electron microscope (Philips, model XL-30), SEM images were taken, and a thickness T₂₃ of the second ceramic coating and a thickness T₂₀ of the second separator were measured through the SEM.

### Thickness test for lithium-ion battery:

The test pressure was adjusted to 600 g through weight addition or reduction; a 3 mm gauge block was placed on a loading platform, white buttons on two sides were pressed, and a panel pressure gap battery thickness tester (PPG battery thickness tester) automatically fed the gauge block and tested it, with any 9 points sequentially tested, with a calibration tolerance of ±0.02 mm, usable within specifications. The lithium-ion battery was held with one hand and placed on the loading platform with the barcode facing up, the barcode was scanned, then the white buttons on two sides were pressed, and the instrument automatically fed the lithium-ion battery and tested it, with the test result recorded as the thickness of the lithium-ion battery.

The thickness of the lithium-ion battery characterized the energy density of the lithium-ion battery; for the same volume of the lithium-ion battery, a larger thickness indicated a lower energy density.

### Hot box test at high temperature:

Under a 25°C condition, the lithium-ion battery was charged at a constant current of 2C to 4.5 V, then charged at a constant voltage of 4.5 V until the current reached 0.02C, placed in a test chamber with circulating air convection, a temperature of 25°C, and a humidity of 80%, and left to stand for 5 min. Then, the test chamber was heated at a rate of 5°C/min to 130°C and maintained at 130°C for 10 min, the test was stopped, and the lithium-ion battery was checked for fire or explosion. No fire or explosion indicated a pass. In each example and comparative example, 10 batteries were tested. The pass rate for the 130°C hot box test = number of passes for the 130°C hot box test/10.

Under a 25°C condition, the lithium-ion battery was charged at a constant current of 2C to 4.5 V, then charged at a constant voltage of 4.5 V until the current reached 0.02C, placed in a test chamber with circulating air convection, a temperature of 25°C, and a humidity of 80%, and left to stand for 5 min. Then, the test chamber was heated at a rate of 5°C/min to 132°C and maintained at 132°C for 10 min, the test was stopped, and the lithium-ion battery was checked for fire or explosion. No fire or explosion indicated a pass. In each example and comparative example, 10 batteries were tested. The pass rate for the 132°C hot box test = number of passes for the 132°C hot box test/10.

The hot box test pass rate characterized the safety performance of the lithium-ion battery; a higher hot box test pass rate indicated better safety performance of the lithium-ion battery.

### Cycling performance test:

Under a 25°C condition, the lithium-ion battery was charged at a constant current of 2C to 4.5 V, then charged at a constant voltage of 4.5 V until the current reached 0.02C, left to stand for 5 min, and then discharged at a constant current of 0.7C to 3.0 V, this being the first cycle, and the discharge capacity was recorded. Charge-discharge cycles were performed for the lithium-ion battery based on the above process, the test was stopped after 1000 cycles (cls), and the capacity retention rate was calculated as an indicator for evaluating the cycling performance of the lithium-ion battery.

Capacity retention rate (%) = (discharge capacity after 1000 cls/discharge capacity of the first cycle) × 100%.

A higher capacity retention rate indicated better cycling performance of the lithium-ion battery.

### Example 1-1

### <Preparation of first separator>

A second base film made of polyethylene (weight-average molecular weight Mw = 4×10⁶) (manufacturer: Silicon Valley, model P492780) with a thickness of 3.5 µm was selected.

A second binder polyimide (PI, Mw = 6×10⁵) and a second thickener sodium carboxymethyl cellulose (Mw = 8×10⁵) were mixed at a mass ratio of 98.5:1.5, and deionized water was added as a solvent and stirred well to form a first adhesive layer slurry with a solid content of 75wt%.

First ceramic particles aluminum oxide (Al₂O₃) and a first ceramic coating binder styrene-butadiene rubber (Mw = 7×10⁶) were mixed, and deionized water was added as a solvent and stirred well to form a first ceramic coating slurry with a solid content of 30wt%.

The first ceramic coating slurry was applied on one surface of a first base film and dried at 60°C to form a first ceramic coating on the surface of the first base film, a first adhesive layer slurry was applied on a surface of the first ceramic coating away from the first base film and dried at 60°C to obtain a first separator coated with the first ceramic coating and the first adhesive layer on a single side. Then, the above steps were repeated on the other surface of the first base film to obtain a first separator. A thickness T₁₀ of the first separator was 7.2 µm, a thickness T₁₃ of the first ceramic coating was 1.4 µm, an average particle size of first ceramic particles was 1.0 µm, and a thickness of the first adhesive layer was 0.45 µm. Based on a mass of the first ceramic coating, a mass percentage W₁₁ of the first ceramic particles was 30%, and a mass percentage W₁₂ of a first ceramic coating binder was 70%.

### <Preparation of second separator>

A second base film made of polyethylene (weight-average molecular weight Mw = 4×10⁶) (manufacturer: Silicon Valley, model P492780) with a thickness of 4.0 µm was selected.

A second binder polyimide (PI, Mw = 6×10⁵) and a second thickener sodium carboxymethyl cellulose (Mw = 8×10⁵) were mixed at a mass ratio of 98.5:1.5, and deionized water was added as a solvent and stirred well to form a second adhesive layer slurry with a solid content of 75wt%.

Second ceramic particles boehmite (γ-AlOOH) and a second ceramic coating binder styrene-butadiene rubber (Mw = 7×10⁶) were mixed, and deionized water was added as a solvent and stirred well to form a second ceramic coating slurry with a solid content of 40wt%.

The second ceramic coating slurry was applied on one surface of the second base film and dried at 60°C to form a second ceramic coating on the surface of the second base film, and the second adhesive layer slurry was applied on a surface of the first ceramic coating away from the first base film and dried at 60°C to obtain a second separator coated with the second ceramic coating and the second adhesive layer on a single side. Then, the second adhesive layer slurry was applied on the other surface of the second base film and dried at 60°C to obtain a second separator. A thickness T₂₀ of the second separator was 6.0 µm, a thickness T₂₃ of the second ceramic coating was 1.2 µm, an average particle size of the second ceramic particles was 0.5 µm, and a thickness of the second adhesive layer was 0.4 µm. Based on a mass of the second ceramic coating, a mass percentage W₂₁ of the second ceramic particles was 30%, and a mass percentage W₂₂ of a second ceramic coating binder was 70%.

### <Preparation of negative electrode plate>

A negative electrode active material artificial graphite, styrene-butadiene rubber, and sodium carboxymethyl cellulose were mixed at a mass ratio of 97.6:1.1:1.3, and deionized water was added as a solvent and stirred well to obtain a first negative electrode slurry with a solid content of 70wt%. The first negative electrode slurry was also used as a second negative electrode slurry. The first negative electrode slurry was applied on one surface of a negative electrode current collector copper foil with a thickness of 6 µm, and dried at 90°C to form a first negative electrode material layer with a thickness of 50 µm. The second negative electrode slurry was applied on the other surface of the negative electrode current collector copper foil, and dried at 90°C to form a second negative electrode material layer with a thickness of 50 µm, obtaining a negative electrode plate with a thickness of 106 µm. The coated negative electrode plate was cold-pressed and then cut to a specification of 74 mm × 824 mm for use. A compacted density of the first negative electrode material layer was 1.735 g/cm³, with a length of 720 mm, and a compacted density of the second negative electrode material layer was 1.735 g/cm³, with a length of 680 mm.

### <Preparation of positive electrode plate>

A positive electrode active material lithium cobalt oxide, a conductive agent conductive carbon black, and a positive electrode binder polyvinylidene fluoride (PVDF) were mixed at a mass ratio of 95:2.5:2.5, and N-methylpyrrolidone (NMP) was added as a solvent and stirred thoroughly to form a positive electrode slurry with a solid content of 75wt%. The positive electrode slurry was applied uniformly on one surface of a positive electrode current collector aluminum foil with a thickness of 10 µm and dried at 90°C to form a positive electrode material layer with a thickness of 55 µm. The positive electrode slurry was applied on the other surface of the positive electrode current collector aluminum foil and dried at 90°C to form a positive electrode material layer with a thickness of 55 µm, obtaining a positive electrode plate coated with the positive electrode material layer on two sides, with a thickness of 120 µm. The coated positive electrode plate was cold-pressed, and then cut to a specification of 70 mm × 800 mm for use. A compacted density of the positive electrode material layer was 4.23 g/cm³.

### <Preparation of electrolyte>

In a glove box filled with a dry argon atmosphere, propylene carbonate (PC), diethyl carbonate (DEC), and ethylene carbonate (EC) were mixed at a mass ratio of 1:1:1 to obtain a base solvent, and lithium salt lithium hexafluorophosphate (LiPF₆) was added to the base solvent, dissolved, and mixed thoroughly to obtain an electrolyte. Based on a mass of the electrolyte, a mass percentage of LiPF₆ was 12%, with the remainder being the base solvent.

### <Preparation of lithium-ion battery>

The prepared positive electrode plate, second separator, negative electrode plate, and first separator were stacked in sequence, and then wound to obtain an electrode assembly. A positive electrode tab aluminum tab was led out through spot welding and a negative electrode tab nickel tab was led out through spot welding. The second ceramic coating in the second separator was faced away from the negative electrode plate, the first separator was disposed on the side of the first negative electrode material layer of the negative electrode plate, and the second separator was disposed on the side of the second negative electrode material layer of the negative electrode plate (see FIG. 2 for the structure, without limitation to FIG. 2). The electrode assembly was placed in an aluminum-plastic film and dried in a vacuum oven at 80°C for 12 h to remove moisture, the electrolyte was injected, and processes such as vacuum sealing, standing, formation (charge at a constant current of 0.02C to 3.5 V, followed by charge at a constant current of 0.1C to 3.9 V), capacity, and shaping were performed to obtain a lithium-ion battery.

### Example 1-2

Except that in the <preparation of lithium-ion battery>, the second separator was disposed on the side of the first negative electrode material layer of the negative electrode plate, the first separator was disposed on the side of the second negative electrode material layer of the negative electrode plate (see FIG. 5 for the structure, without limitation to FIG. 5), and the rest was the same as Example 1-1.

### Example 1-3

### <Preparation of first separator>

A first ceramic coating slurry was applied on one surface of the first base film and dried at 60°C to form a first ceramic coating on one surface of the first base film, and a first adhesive layer slurry was applied on the surface of the first ceramic coating away from the first base film and dried at 60°C to obtain a first separator coated with the first ceramic coating and the first adhesive layer on a single side. Then, the first adhesive layer slurry was applied on the other surface of the first base film and dried at 60°C to obtain the first separator. A thickness T₁₀ of the first separator was 5.8 µm.

### <Preparation of lithium-ion battery>

The prepared positive electrode plate, second separator, negative electrode plate, and first separator were stacked in sequence, and then wound to obtain an electrode assembly. A positive electrode tab aluminum tab was led out through spot welding and a negative electrode tab nickel tab was led out through spot welding. The second ceramic coating in the second separator was faced away from the negative electrode plate, the first ceramic coating in the first separator was faced away from the negative electrode plate, the first separator was disposed on the side of the first negative electrode material layer of the negative electrode plate, and the second separator was disposed on the side of the second negative electrode material layer of the negative electrode plate. The electrode assembly was placed in an aluminum-plastic film and dried in a vacuum oven at 80°C for 12 h to remove moisture, the electrolyte was injected, and processes such as vacuum sealing, standing, formation (charge at a constant current of 0.02C to 3.5 V, followed by charge at a constant current of 0.1C to 3.9 V), capacity, and shaping were performed to obtain a lithium-ion battery.

The rest was the same as Example 1-1.

### Example 1-4

### <Preparation of second separator>

A second ceramic coating slurry was applied on one surface of the second base film and dried at 60°C to form a second ceramic coating on one surface of the second base film, and the second adhesive layer slurry was applied on the surface of the first ceramic coating away from the first base film and dried at 60°C to obtain a second separator coated with the second ceramic coating and the second adhesive layer on a single side. Then, the above steps were repeated on the other surface of the second base film to obtain the second separator. A thickness T₂₀ of the second separator was 7.2 µm.

### <Preparation of lithium-ion battery>

The prepared positive electrode plate, second separator, negative electrode plate, and first separator were stacked in sequence, and then wound to obtain an electrode assembly. A positive electrode tab aluminum tab was led out through spot welding and a negative electrode tab nickel tab was led out through spot welding. The first separator was disposed on the side of the first negative electrode material layer of the negative electrode plate, and the second separator was disposed on the side of the second negative electrode material layer of the negative electrode plate. The electrode assembly was placed in an aluminum-plastic film and dried in a vacuum oven at 80°C for 12 h to remove moisture, the electrolyte was injected, and processes such as vacuum sealing, standing, formation (charge at a constant current of 0.02C to 3.5 V, followed by charge at a constant current of 0.1C to 3.9 V), capacity, and shaping were performed to obtain the lithium-ion battery.

The rest was the same as Example 1-1.

### Examples 1-5 to 1-7

Except for adjusting the type of the first ceramic particles according to Table 1, the rest was the same as Example 1-1.

### Examples 2-1 to 2-10

Except for adjusting the relevant preparation parameters according to Table 2, the rest was the same as Example 1-1.

### Examples 3-1 to 3-8

Except for adjusting the relevant preparation parameters according to Table 3, the rest was the same as Example 1-1.

When the mass percentage W₁₁ of the first ceramic particles was changed, the mass percentage W₁₂ of the first ceramic coating binder was changed accordingly, with the sum of the mass percentages of the first ceramic particles and the first ceramic coating binder being 100%; and when the mass percentage W₂₁ of the second ceramic particles was changed, the mass percentage W₂₂ of the second ceramic coating binder was changed accordingly, with the sum of the mass percentages of the second ceramic particles and the second ceramic coating binder being 100%.

### Examples 4-1 to 4-8

Except for adjusting the relevant preparation parameters according to Table 4, the rest was the same as Example 2-9.

### Comparative Example 1

Except for preparing the lithium-ion battery according to the following method without disposing the second separator, the rest was the same as Example 1-1.

### <Preparation of lithium-ion battery>

The prepared positive electrode plate, first separator, negative electrode plate, and first separator were stacked in sequence, and then wound to obtain an electrode assembly. A positive electrode tab aluminum tab was led out through spot welding and a negative electrode tab nickel tab was led out through spot welding. The electrode assembly was placed in an aluminum-plastic film and dried in a vacuum oven at 80°C for 12 h to remove moisture, the electrolyte was injected, and processes such as vacuum sealing, standing, formation (charge at a constant current of 0.02C to 3.5 V, followed by charge at a constant current of 0.1C to 3.9 V), capacity, and shaping were performed to obtain a lithium-ion battery.

### Comparative Example 2

Except for preparing the lithium-ion battery according to the following method without disposing the second separator, the rest was the same as Example 1-3.

### <Preparation of lithium-ion battery>

The prepared positive electrode plate, first separator, negative electrode plate, and first separator were stacked in sequence, and then wound to obtain an electrode assembly. A positive electrode tab aluminum tab was led out through spot welding and a negative electrode tab nickel tab was led out through spot welding. The first ceramic coating in the first separator was faced away from the negative electrode plate. The electrode assembly was placed in an aluminum-plastic film and dried in a vacuum oven at 80°C for 12 h to remove moisture, the electrolyte was injected, and processes such as vacuum sealing, standing, formation (charge at a constant current of 0.02C to 3.5 V, followed by charge at a constant current of 0.1C to 3.9 V), capacity, and shaping were performed to obtain a lithium-ion battery.

### Comparative Example 3

Except for preparing the lithium-ion battery according to the following method without disposing the first separator, the rest was the same as Example 1-4.

### <Preparation of lithium-ion battery>

The prepared positive electrode plate, second separator, negative electrode plate, and second separator were stacked in sequence, and then wound to obtain an electrode assembly. A positive electrode tab aluminum tab was led out through spot welding and a negative electrode tab nickel tab was led out through spot welding. The electrode assembly was placed in an aluminum-plastic film and dried in a vacuum oven at 80°C for 12 h to remove moisture, the electrolyte was injected, and processes such as vacuum sealing, standing, formation (charge at a constant current of 0.02C to 3.5 V, followed by charge at a constant current of 0.1C to 3.9 V), capacity, and shaping were performed to obtain a lithium-ion battery.

### Comparative Example 4

Except for preparing the lithium-ion battery according to the following method without disposing the first separator, the rest was the same as Example 1-1.

### <Preparation of lithium-ion battery>

The prepared positive electrode plate, second separator, negative electrode plate, and second separator were stacked in sequence, and then wound to obtain an electrode assembly. A positive electrode tab aluminum tab was led out through spot welding and a negative electrode tab nickel tab was led out through spot welding. The second ceramic coating in the second separator was faced away from the negative electrode plate. The electrode assembly was placed in an aluminum-plastic film and dried in a vacuum oven at 80°C for 12 h to remove moisture, the electrolyte was injected, and processes such as vacuum sealing, standing, formation (charge at a constant current of 0.02C to 3.5 V, followed by charge at a constant current of 0.1C to 3.9 V), capacity, and shaping were performed to obtain a lithium-ion battery.

The preparation parameters and performance parameters of each example and comparative example are shown in Tables 1 to 4.

**Table 1**

| | Number of layers of first ceramic coating | Number of layers of second ceramic coating | Positional relationship between separator and negative electrode plate | Type of first ceramic particles | Capacity retention rate | Thickness of lithium-ion battery (mm) | 130°C hot box test pass rate | 132°C hot box test pass rate |
|---|---|---|---|---|---|---|---|---|
| Example 1-1 | Double layer | Single layer | A first separator is arranged on one side of a first negative electrode material layer, and a second separator is arranged on one side of a second negative electrode material layer | Al₂O₃ | 90% | 4.90 | 10/10 | 10/10 |
| Example 1-2 | Double layer | Single layer | A second separator is placed on one side of a first negative electrode material layer, and a first separator is placed on one side of a second negative electrode material layer | Al₂O₃ | 85% | 4.90 | 10/10 | 10/10 |
| Example 1-3 | Single layer | Single layer | A first separator is arranged on one side of a first negative electrode material layer, and a second separator is arranged on one side of a second negative electrode material layer | Al₂O₃ | 86% | 4.82 | 10/10 | 7/10 |
| Example 1-4 | Double layer | Double layer | A first separator is arranged on one side of a first negative electrode material layer, and a second separator is arranged on one side of a second negative electrode material layer | Al₂O₃ | 92% | 4.98 | 10/10 | 10/10 |
| Example 1-5 | Double layer | Single layer | A first separator is arranged on one side of a first negative electrode material layer, and a second separator is arranged on one side of a second negative electrode material layer | ZrO₂ | 87% | 4.90 | 10/10 | 10/10 |
| Example 1-6 | Double layer | Single layer | A first separator is arranged on one side of a first negative electrode material layer, and a second separator is arranged on one side of a second negative electrode material layer | TiO₂ | 84% | 4.90 | 9/10 | 7/10 |
| Example 1-7 | Double layer | Single layer | A first separator is arranged on one side of a first negative electrode material layer, and a second separator is arranged on one side of a second negative electrode material layer | SiO₂ | 83% | 4.90 | 8/10 | 5/10 |
| Comparative Example 1 | Double layer | \ | \ | Al₂O₃ | 93% | 5.10 | 6/10 | 3/10 |
| Comparative Example 2 | Single layer | \ | \ | Al₂O₃ | 87% | 4.78 | 2/10 | 0/10 |
| Comparative Example 3 | \ | Double layer | \ | \ | 78% | 4.98 | 10/10 | 10/10 |
| Comparative Example 4 | \ | Single layer | \ | \ | 70% | 4.80 | 10/10 | 10/10 |

| | | | | | | | | |
|---|---|---|---|---|---|---|---|---|
| Note: "\" in Table 1 indicates no corresponding parameter. | | | | | | | | |

From Examples 1-1 to 1-7 and Comparative Examples 1 to 4, it can be seen that for the secondary batteries of the examples of the present application, different types of first separators and second separators are combined and the types of first ceramic particles in the first separator and the types of the second ceramic particles in the second separator are adjusted to be within the scope of the present application, enabling the secondary batteries to achieve relatively high capacity retention rate, relatively small thickness, and relatively high hot box test pass rates at both 130°C and 132°C, and indicating that the secondary battery can balance cycling performance, energy density, and safety performance. In contrast, for the secondary batteries of Comparative Examples 1 to 4, the same type of separator is selected, or the types of ceramic particles in the two separators do not meet the limitations of the present application, the secondary batteries in the comparative examples cannot simultaneously achieve relatively high capacity retention rate, relatively small thickness, and relatively high hot box test pass rates at 130°C and 132°C, indicating that it is difficult for the secondary batteries of the comparative examples to balance cycling performance, energy density, and safety performance.

**Table 2**

| | Average particle size of first ceramic particles (µm) | Average particle size of second ceramic particles (µm) | Capacity retention rate | Lithium-ion battery thickness (mm) | 130°C hot box test pass rate | 132°C hot box test pass rate |
|---|---|---|---|---|---|---|
| Example 1-1 | 1.0 | 0.5 | 90% | 4.90 | 10/10 | 10/10 |
| Example 2-1 | 0.2 | 0.5 | 89% | 4.90 | 10/10 | 10/10 |
| Example 2-2 | 1.2 | 0.5 | 91% | 4.90 | 10/10 | 10/10 |
| Example 2-3 | 0.1 | 0.5 | 85% | 4.90 | 10/10 | 10/10 |
| Example 2-4 | 1.4 | 0.5 | 89% | 4.90 | 9/10 | 5/10 |
| Example 2-5 | 1.0 | 0.1 | 89% | 4.90 | 10/10 | 10/10 |
| Example 2-6 | 1.0 | 1.0 | 91% | 4.90 | 10/10 | 10/10 |
| Example 2-7 | 1.0 | 0.05 | 85% | 4.90 | 10/10 | 5/10 |
| Example 2-8 | 1.0 | 1.2 | 84% | 4.90 | 10/10 | 6/10 |
| Example 2-9 | 0.2 | 0.1 | 87% | 4.90 | 10/10 | 10/10 |
| Example 2-10 | 1.2 | 1.0 | 92% | 4.90 | 10/10 | 8/10 |

The average particle size of the first ceramic particles typically affects the cycling performance, energy density, and safety performance of the secondary battery. From Example 1-1, Examples 2-1 to 2-4, and Examples 2-9 and 2-10, it can be seen that secondary batteries with the average particle size of the first ceramic particles within the scope of the present application achieve relatively high capacity retention rate, relatively small thickness, and relatively high hot box test pass rates at both 130°C and 132°C, indicating that the secondary battery can balance cycling performance, energy density, and safety performance. As compared to Example 1-1, and Examples 2-1 and 2-2, the first ceramic particles in Example 2-3 have a smaller average particle size, resulting in slightly weaker liquid retention and a less pronounced improvement in cycling performance of the secondary battery, and the first ceramic particles in Example 2-4 have a larger average particle size, increasing the possibility of short circuits by puncturing the separator during hot box test, thus slightly reducing safety performance.

The average particle size of the second ceramic particles typically affects the cycling performance, energy density, and safety performance of the secondary battery. From Example 1-1, Examples 2-5 to 2-8, and Examples 2-9 and 2-10, it can be seen that secondary batteries with the average particle size of the second ceramic particles within the scope of the present application achieve relatively high capacity retention rate, relatively small thickness, and relatively high hot box test pass rates at both 130°C and 132°C, indicating that the secondary battery can balance cycling performance, energy density, and safety performance. As compared to Example 1-1, and Examples 2-5 and 2-6, the second ceramic particles in Example 2-7 have a smaller average particle size, resulting in slightly weaker liquid retention and a less pronounced improvement in cycling performance of the secondary battery, and the second ceramic particles in Example 2-8 have a larger average particle size, increasing the possibility of short circuits by puncturing the separator during the hot box test, thus slightly reducing safety performance.

**Table 3**

| | W₁₁ (%) | W₂₁ (%) | Capacity retention rate | Lithium-ion battery thickness (mm) | 130°C hot box test pass rate | 132°C hot box test pass rate |
|---|---|---|---|---|---|---|
| Example 1-1 | 30 | 30 | 90% | 4.90 | 10/10 | 10/10 |
| Example 3-1 | 10 | 30 | 88% | 4.90 | 10/10 | 10/10 |
| Example 3-2 | 50 | 30 | 91% | 4.90 | 10/10 | 10/10 |
| Example 3-3 | 5 | 30 | 83% | 4.90 | 9/10 | 5/10 |
| Example 3-4 | 55 | 30 | 92% | 4.90 | 10/10 | 2/10 |
| Example 3-5 | 30 | 10 | 88% | 4.90 | 10/10 | 10/10 |
| Example 3-6 | 30 | 50 | 91% | 4.90 | 10/10 | 10/10 |
| Example 3-7 | 30 | 5 | 85% | 4.90 | 7/10 | 5/10 |
| Example 3-8 | 30 | 55 | 91% | 4.90 | 10/10 | 3/10 |

The mass percentage W₁₁ of the first ceramic particles typically affects the cycling performance, energy density, and safety performance of the secondary battery. From Example 1-1, and Examples 3-1 to 3-4, it can be seen that secondary batteries with the mass percentage W₁₁ of the first ceramic particles within the scope of the present application achieve relatively high capacity retention rate, relatively small thickness, and relatively high hot box test pass rates at both 130°C and 132°C, indicating that the secondary battery can balance cycling performance, energy density, and safety performance. As compared to Examples 1-1, and Examples 3-1 and 3-2, the first ceramic particles in Example 3-3 have a lower mass percentage in the first ceramic coating, resulting in slightly weaker liquid retention and less binding effect on the first base film at high temperatures, thus slightly reducing the improvement in cycling performance and safety performance of the secondary battery, and the first ceramic particles in Example 3-4 have a higher mass percentage in the first ceramic coating, increasing the possibility of short circuits by the first ceramic particles puncturing the separator during the hot box test, thus slightly reducing safety performance.

The mass percentage W₂₁ of the second ceramic particles typically affects the cycling performance, energy density, and safety performance of the secondary battery. From Example1-1, and Examples 3-5 to 3-8, it can be seen that secondary batteries with the mass percentage W₂₁ of the second ceramic particles within the scope of the present application achieve relatively high capacity retention rate, relatively small thickness, and relatively high hot box test pass rates at both 130°C and 132°C, indicating that the secondary battery can balance cycling performance, energy density, and safety performance. As compared to Example 1-1, and Examples 3-5 and 3-6, the second ceramic particles in Example 3-7 have a lower mass percentage in the second ceramic coating, resulting in slightly weaker liquid retention and less binding effect on the second base film at high temperatures, thus slightly reducing the improvement in cycling performance and safety performance of the secondary battery, and the second ceramic particles in Example 3-8 have a higher mass percentage in the second ceramic coating, increasing the possibility of short circuits by the second ceramic particles puncturing the separator during the hot box test, thus slightly reducing safety performance.

**Table 4**

| | T₁₃ (µm) | T₁₀ (µm) | T₂₃ (µm) | T₂₀ (µm) | Capacity retention rate | Lithium-ion battery thickness (mm) | 130°C hot box test pass rate | 132°C hot box test pass rate |
|---|---|---|---|---|---|---|---|---|
| Example 2-9 | 1.4 | 7.2 | 1.2 | 6.0 | 87% | 4.90 | 10/10 | 10/10 |
| Example 4-1 | 0.5 | 5.4 | 1.2 | 6.0 | 85% | 4.70 | 10/10 | 10/10 |
| Example 4-2 | 1.5 | 7.4 | 1.2 | 6.0 | 92% | 4.93 | 10/10 | 10/10 |
| Example 4-3 | 0.3 | 5.0 | 1.2 | 6.0 | 81% | 4.67 | 9/10 | 7/10 |
| Example 4-4 | 2.0 | 8.4 | 1.2 | 6.0 | 93% | 5.12 | 10/10 | 8/10 |
| Example 4-5 | 1.4 | 7.2 | 0.3 | 5.1 | 85% | 4.82 | 10/10 | 9/10 |
| Example 4-6 | 1.4 | 7.2 | 1.5 | 6.3 | 90% | 4.94 | 10/10 | 9/10 |
| Example 4-7 | 1.4 | 7.2 | 0.05 | 4.85 | 82% | 4.81 | 8/10 | 6/10 |
| Example 4-8 | 1.4 | 7.2 | 2.5 | 7.3 | 92% | 5.13 | 10/10 | 9/10 |

The thickness T₁₃ of the first ceramic coating and the thickness T₁₀ of the first separator typically affect the cycling performance, energy density, and safety performance of the secondary battery. From Example 2-9, and Examples 4-1 to 4-4, it can be seen that secondary batteries with the thickness T₁₃ of the first ceramic coating and the thickness T₁₀ of the first separator within the scope of the present application achieve relatively high capacity retention rate, relatively small thickness, and relatively high hot box test pass rates at both 130°C and 132°C, indicating that the secondary battery can balance cycling performance, energy density, and safety performance. As compared to Example 2-9, and Examples 4-1 and 4-2, the thickness of the first ceramic coating and the thickness of the first separator in Example 4-3 are smaller, resulting in slightly weaker liquid retention of the first ceramic coating and less binding effect on the first base film at high temperatures, thus slightly reducing the improvement in cycling performance and safety performance of the secondary battery, and the thickness of the first ceramic coating and the thickness of the first separator in Example 4-4 are relatively large, resulting in a slight loss in energy density and an increased possibility of short circuits by the first ceramic particles puncturing the separator during the hot box test, thus slightly reducing safety performance.

The thickness T₂₃ of the second ceramic coating and the thickness T₂₀ of the second separator typically affect the cycling performance, energy density, and safety performance of the secondary battery. From Example 2-9, and Examples 4-5 to 4-8, it can be seen that secondary batteries with the thickness T₂₃ of the second ceramic coating and the thickness T₂₀ of the second separator within the scope of the present application achieve relatively high capacity retention rate, relatively small thickness, and relatively high hot box test pass rates at both 130°C and 132°C, indicating that the secondary battery can balance cycling performance, energy density, and safety performance. As compared to Example 2-9, and Examples 4-5 and 4-6, the thickness of the second ceramic coating and the thickness of the first separator in Example 4-7 are relatively small, resulting in less binding effect of the second ceramic coating on the second base film at high temperatures, thus slightly reducing the improvement in cycling performance and safety performance of the secondary battery, and the thickness of the second ceramic coating and the thickness of the second separator in Example 4-8 are relatively large, resulting in a slight loss in energy density and an increased possibility of short circuits by the second ceramic particles puncturing the separator during the hot box test, thus slightly reducing safety performance.

It should be noted that, in this document, relational terms such as first and second are used solely to distinguish one entity or operation from another entity or operation without necessarily requiring or implying any actual relationship or order between such entities or operations. Moreover, the terms "include," "comprise," or any other variation thereof are intended to cover a non-exclusive inclusion, such that a process, method, or article that includes a series of elements includes not only those elements but also other elements not expressly listed or elements inherent to such process, method, or article.

These embodiments in this specification are described in a related manner, and identical or similar parts between these embodiments may be referred to each other, with each embodiment focusing on the differences from other embodiments.

The above description is only of preferred embodiments of the present application and is not intended to limit the present application. Any modifications, equivalent substitutions, improvements, and the like made within the spirit and principles of the present application should be included within the scope of protection of the present application.

## Claims

1. A secondary battery, comprising an electrode assembly, wherein the electrode assembly is a jelly-roll structure, and the electrode assembly comprises a positive electrode plate, a negative electrode plate, a first separator, and a second separator;
the first separator comprises a first base film and a first ceramic coating , the first ceramic coating being disposed on at least one side of the first base film , wherein the first ceramic coating comprises first ceramic particles, the first ceramic particles comprising at least one of aluminum oxide, zirconium dioxide, titanium dioxide, or silicon dioxide; and
the second separator comprises a second base film and a second ceramic coating, the second ceramic coating being disposed on at least one side of the second base film, wherein the second ceramic coating comprises second ceramic particles, the second ceramic particles comprising boehmite.

2. The secondary battery according to claim 1, wherein the negative electrode plate is located between the first separator and the second separator, the negative electrode plate comprising a negative electrode current collector and a first negative electrode material layer and a second negative electrode material layer disposed on two sides of the negative electrode current collector, wherein along a winding direction of the electrode assembly, a length of the first negative electrode material layer is greater than a length of the second negative electrode material layer, the first separator is disposed on a side of the first negative electrode material layer of the negative electrode plate, and the second separator is disposed on a side of the second negative electrode material layer of the negative electrode plate.

3. The secondary battery according to claim 2, wherein the first ceramic coating is disposed on both sides of the first base film .

4. The secondary battery according to claim 2, wherein the second separator is located between the positive electrode plate and the negative electrode plate, and the second ceramic coating is disposed only on a side of the second base film facing away from the negative electrode plate .

5. The secondary battery according to any one of claims 1 to 4, wherein an average particle size of the first ceramic particles is from 0.2 µm to 1.2 µm, and an average particle size of the second ceramic particles is from 0.1 µm to 1.0 µm.

6. The secondary battery according to any one of claims 1 to 4, wherein the first separator comprises a first adhesive layer, the first adhesive layer being disposed on both sides of the first base film, and the first ceramic coating being disposed between the first base film and the first adhesive layer; and
the second separator comprises a second adhesive layer, the second adhesive layer being disposed on both sides of the second base film, and the second ceramic coating being disposed between the second base film and the second adhesive layer .

7. The secondary battery according to claim 5, wherein, based on a mass of the first ceramic coating, a mass percentage of the first ceramic particles is from 10% to 50%; and based on a mass of the second ceramic coating, a mass percentage of the second ceramic particles is from 10% to 50%.

8. The secondary battery according to any one of claims 1 to 4, wherein a thickness of the first separator is from 5.4 µm to 7.4 µm, and a thickness of the second separator is from 5.1 µm to 6.3 µm.

9. The secondary battery according to any one of claims 1 to 4, wherein a thickness of the first ceramic coating is from 0.5 µm to 1.5 µm, and a thickness of the second ceramic coating is from 0.3 µm to 1.5 µm.

10. The secondary battery according to claim 6, wherein materials of the first adhesive layer and the second adhesive layer each independently comprise at least one of polyvinylidene fluoride, polyvinylidene fluoride-hexafluoropropylene copolymer, polyimide, polyvinyl alcohol, or sodium carboxymethyl cellulose.

11. An electric apparatus, comprising the secondary battery according to any one of claims 1 to 10.
